(19) Europäisches Patentamt
European Patent Office
Office européen des brevets

(11) **EP 2 004 868 B1**

(12) **EUROPEAN PATENT SPECIFICATION**

(45) Date of publication and mention
of the grant of the patent:
**15.12.2010 Bulletin 2010/50**

(51) Int Cl.:
*C22B 4/00* *(2006.01)*    *C22B 5/10* *(2006.01)*
*C22B 34/12* *(2006.01)*    *C22B 23/00* *(2006.01)*
*C21B 13/00* *(2006.01)*    *H05B 6/46* *(2006.01)*
*H05B 6/64* *(2006.01)*    *F26B 3/347* *(2006.01)*

(21) Application number: **07705289.2**

(22) Date of filing: **01.03.2007**

(86) International application number:
**PCT/GB2007/000704**

(87) International publication number:
**WO 2007/099315 (07.09.2007 Gazette 2007/36)**

(54) **REDUCTION PROCESSING OF METAL-CONTAINING ORES IN THE PRESENCE OF MICROWAVE AND RF ENERGY**

REDUZIERENDE VERARBEITUNG VON METALLHALTIGEN ERZEN IN GEGENWART VON MIKROWELLEN- UND RF-ENERGIE

TRAITEMENT DE RÉDUCTION DE MINERAIS MÉTALLIFÈRES AUGMENTÉ PAR IRRADIATION D'ÉNERGIE À MICRO-ONDES ET RF

(84) Designated Contracting States:
**AT BE BG CH CY CZ DE DK EE ES FI FR GB GR HU IE IS IT LI LT LU LV MC NL PL PT RO SE SI SK TR**

(30) Priority: **03.03.2006 GB 0604327**

(43) Date of publication of application:
**24.12.2008 Bulletin 2008/52**

(73) Proprietor: **Anglo Operations Limited
Johannesburg 2001 (ZA)**

(72) Inventor: **MARSH, John
2025 Johannesburg (ZA)**

(74) Representative: **Setna, Rohan P.
Boult Wade Tennant
Verulam Gardens
70 Gray's Inn Road
London WC1X 8BT (GB)**

(56) References cited:
**EP-A- 0 500 252    DE-A1- 19 633 312
US-A- 3 740 042    US-A- 4 375 441
US-A- 4 906 290    US-B1- 6 277 168
US-B2- 6 350 973**

- **DATABASE WPI Week 200344 Derwent Publications Ltd., London, GB; AN 2003-458152 XP002400649 & CN 1 403 595 A (REN R) 19 March 2003 (2003-03-19)**
- **DATABASE WPI Week 200634 Derwent Publications Ltd., London, GB; AN 2006-319657 XP002400650 & CN 1 710 121 A (UNIV KUNMING TECHNOLOGY) 21 December 2005 (2005-12-21)**
- **PATENT ABSTRACTS OF JAPAN vol. 013, no. 112 (P-844), 17 March 1989 (1989-03-17) & JP 63 289496 A (POWER REACTOR & NUCLEAR FUEL DEV CORP), 25 November 1988 (1988-11-25)**

**Description**

The present invention relates to the treatment of metals in ores or concentrates (for example metal-containing oxides) and, in particular, a process for the chemical reduction of iron, for example, in ores or concentrates containing iron-oxides.

Extractive metallurgy is concerned with converting ores such as metal oxides, sulphides, chlorides and carbonates into the metal component of the ore. This is usually achieved by a process involving chemical reduction. Of critical importance in all extractive metallurgical processes is the need to achieve reduction of the metal ore on a large scale economically.

The reduction of iron in various ore forms is important in many industrial processes, for example in the production of iron and non-ferrous metals, such as nickel, vanadium and titanium. Examples of ores and concentrates from which iron may be extracted by reduction means include ilmenite, titaniferous magnetite, vanadiferous magnetite, iron ore, limonitic laterites and saprolitic laterites. In some industrial processes, it is desirable to eliminate a metal from an ore or concentrate, for example, the elimination of iron impurities from ilmenite. In other industrial processes it is the metal extracted from the ore or concentrate which is the desired product, for example extracted iron from iron ore.

There are currently several process routes that can be applied to separating iron from titanium oxide in ilmenite. These routes include the following:

   a) Fusion of the ilmenite ore with alkali metals and hydroxide to produce acid soluble salts;

   b) Direct leaching of the ilmenite using mineral acids;

   c) Reduction of the ilmenite followed by leaching of the reduced iron and impurities;

   d) Carbothermic reduction and smelting to produce pig iron and slag containing titanium dioxide; and

   e) Selective chlorination of the iron by segregation.

Traditionally, conventional heating processes and chemical methods have been used to reduce the iron. Conventional heating processes encompass heating by convection, conduction and/or radiation. Typically, temperatures of at least 1000°C are required to process iron-containing ores. For example in the direct reduction in iron ore:

   (i) the SL/RN process requires a temperature of 1100°C;
   (ii) the DRC process requires a temperature of 1100°C;
   (iii) the HyL process requires a temperature of 1000°C; and
   (iv) the MIDREX process requires a temperature of 760 to 930°C.

More recently, it has been suggested to use microwave (MW) energy to heat the ore. In particular, US 4, 906, 290 and US 6,277,168 describe processes for the reduction of metal ores which involve the application of MW energy. US 4,906,290 describes a leaching or smelting precursor method of drying and heating particulate ores or concentrates which have been previously intimately admixed with either an already active form of carbon or with some other carbon-containing material which can be readily dried and heated to charring temperatures by MW energy comprising irradiating the composite with MW energy. US 6,277,168 describes a method for the direct preparation of a metal from a metal-containing ore by applying MW energy to extract metal from masses made by forming a powder of the ore and an optional reducing agent.

However, the use of dielectric heating (eg MW heating) has not proved economically viable on a large scale in view of the complication and expense of heating substantial volumes of ores to high temperatures (> 1000°C). There is therefore an economic prejudice in commercial extractive metallurgy to rely on heating methods other than convection, conduction and/or radiation.

It is an object of the present invention to address at least some of the problems and disadvantages of the prior art and to provide an energy efficient process for the chemical reduction of metal-containing ores and concentrates.

Accordingly, the present invention provides a process for reducing a metal-containing material, the process comprising;
providing a metal-containing material in a reaction cavity,
heating said metal-containing material by convective and/or conductive and/or radiative means to a reduction temperature less than 1200°C,
exposing said metal-containing material to microwave (MW) energy in the reaction cavity,
exposing said metal-containing material to radio frequency (RF) energy in the reaction cavity, and

exposing said metal-containing material to a reducing agent in the reaction cavity,
wherein exposing the metal-containing material to MW and/or RF energy does not significantly heat said material, in that its temperature is raised by less than 50°C.

In another aspect the present invention provides an extractive metallurgical process for the chemical reduction of an iron-containing ore or concentrate, the process comprising:

providing an iron-containing ore or concentrate in a reaction cavity,
heating said ore or concentrate by convective and/or conductive and/or radiative means,
exposing said ore or concentrate to a reducing agent in the reaction cavity, whereby some or all of said ore or concentrate is reduced to iron,
characterised in that said ore or concentrate is also exposed to microwave (MW) energy and radio frequency (RF) energy in the reaction cavity concurrently with said heating of said ore or concentrate, the MW and RF energy levels being selected so that there is little or no additional heating of said ore or concentrate, in that the temperature of the ore or concentrate is raised by less than 50°C,
and in that the temperature of said ore or concentrate does not exceed 850°C, preferably 650°C, during the reduction process.

The present inventors have surprisingly found that the application of microwave (MW) and radio frequency (RF) energy, together with conventional heating means, achieves reduction and/or metallisation of a metal in a metal-containing material at a lower temperature and at a shorter residence time than is possible using the conventional processes. As a consequence, the present invention enables the reduction of metal ores/concentrates without the need to heat the ore/concentrate to a high temperature. The process is therefore energy efficient and environmentally friendly because energy consumption is reduced and the large capital expenditure on equipment, which is required for high temperature operation, is obviated.

In the present invention, the heating of the metal-containing material by convective and/or conductive and/or radiative means preferably excludes the use of MW or RF energy as a significant source of heating energy. Advantageously, exposing the metal-containing material to MW and/or RF energy (dielectric energy) raises the temperature by less than 50°C, more preferably by less than 20°C, still more preferably less than 10°C, most preferably less than 5°C.

The application of microwave (MW) and radio frequency (RF) energy, together with conventional heating means has been surprisingly found to achieve direct reduction and/or metallisation of a metal in a metal-containing material at a lower temperature and at a shorter residence time than is possible using the conventional processes. This surprising effect is analogous to the MW and RF acting as a "catalyst" for the reduction of the material in question.

The term "direct reduction" is used to describe the reduction of a metal in a metal-containing material wherein the metal-containing material remains in a solid-state throughout the reduction process.

As used herein the term "metallisation" is used to describe the reduction of a metal in a positive oxidation state (higher than 0) to a metal having a zero oxidation state.

Each aspect as defined herein may be combined with any other aspect or aspects unless clearly indicated to the contrary. In particular any feature indicated as being preferred or advantageous may be combined with any other feature or features indicated as being preferred or advantageous.

The inventors have also observed enhanced reaction kinetics and an improved extent of reduction and/or metallisation when only one of MW or RF energy is applied to the metal containing material, compared to conventional reduction and/or metallisation processes. However, surprisingly, the improvements over conventional methods are much larger when both MW and RF energy is applied.

The process for reducing metal-containing materials as herein described has surprisingly been found to improve the reducing process of metal-containing materials over conventional methods. While not wishing to be bound by theory, it is believed that exposing the metal-containing material to MW and/or RF energy changes the structure of the material to make it more amenable to being reduced by the reducing agent. Accordingly, it will be appreciated that the main process steps can be applied to any process in which a change in the structure of the material is desired. Accordingly, a process for treating a metal-containing material may comprise:

providing a metal-containing material,
heating said metal-containing material by convective and/or conductive and/or radiative means,
exposing said metal-containing material to microwave (MW) energy, and
exposing said metal-containing material to radio frequency (RF) energy.

This process may, for example, be used to oxidise, roast, calcine and/or dehyroxylate a metal-containing material.

Metal-containing materials for use in the present invention may include, for example, ores and concentrates.

The metal-containing material comprises at least one metal in a positive oxidation state, for example $Fe^{3+}$ in $Fe_2O_3$, which may be reduced to a lower oxidation state, for example $Fe^{2+}$ or $Fe^0$, using the reduction process of the present invention.

Preferably, the metal-containing material comprises a transition metal, for example iron, nickel, cobalt, vanadium, copper, titanium, chromium, zinc. The transition metal may be in the form of a transition metal oxide and/or sulphide. More preferably, the metal-containing material comprises an iron-containing ore, most preferably an iron oxide-containing ore. Examples of metal-containing ores for use in the present invention include ilmenite, titaniferous magnetite, vanadiferous magnetite, iron ore, hematite, limonitic laterites and saprolitic laterites, including mixture of two or more thereof. A preferred ore is or comprises ilmenite or iron ore. The composition of ilmenite is briefly discussed below.

The term ilmenite as used herein includes the mineral $FeTiO_3$. However, it will be understood that the composition of ilmenite from mineral sand deposits rarely conforms to the stoichiometric composition, $FeTiO_3$ (47.4% FeO and 52.6% $TiO_2$). Accordingly, it will be understood that the term ilmenite as used herein also encompasses non-stoichiometric compositions.

Furthermore, natural ilmenite is a mineral rich in $FeTiO_3$ and contains small amounts of MnO, MgO, $Fe_2O_3$ and/or $Ti_2O_3$ in its structure, where some of the ferrous iron is replaced by $Mn^{2+}$ and $Mg^{2+}$. The resulting general formula is (Fe, Mn, Mg) $TiO_3$.

It is well known that ilmenite in beach sand deposits undergoes a progressive alteration in composition and structure. The $Fe^{2+}$ in ilmenite is gradually converted to $Fe^{3+}$ as a result of prolonged atmospheric exposure. The $Fe^{3+}$ can be leached out of the mineral grains by natural waters. This process is called weathering. Weathering enriches ilmenite in titanium. Weathering of ilmenite leads to the formation of pseudorutile according to Reaction 1.

$$\text{Reaction 1:} \qquad 3FeTiO_3 + 2H^+ + 0.5O_2 = Fe_2Ti_3O_9 + Fe^{2+} + H_2O$$

Alteration continues with the leaching of more iron from the pseudorutile, leading to the complete breakdown of the pseudorutile and the formation of anatase, as shown in Reaction 2.

$$\text{Reaction 2:} \qquad Fe_2Ti_3O_9 + 4H^+ = 3TiO_2 + 2Fe^{2+} + 2H_2O + 0.5O_2$$

In extreme cases, weathering results in the formation of an amorphous material with a composition close to $TiO_2$. This amorphous material is generally referred to as leucoxene.

Accordingly, it will be understood that the term ilmenite as used herein also encompasses compositions comprising ilmenite together with other ores, for example ilmenite-hematite solid solutions, rutile and variable amounts of other oxide and silicate mineral impurities.

The metal-containing material will typically be provided in the form of small pieces of crushed ore having diameters of less than approximately 100 mm, and preferably less than 50 mm. The metal-containing material may be provided in the form of pellets (pelletised fine particles) with diameters from 5 to 30mm, and preferably from 10 to 20 mm. In addition, or alternatively, the metal-containing material may be provided in the form of individual particles having diameters less than 5 mm, preferably less than 1 mm, more preferably less than 0.5 mm.

The metal-containing material may be pre-oxidised prior to the reduction process of the present invention. It will be understood that a variety of methods may be used to pre-oxidise the metal-containing material. For example, the metal-containing material may be oxidised by exposure to oxygen (either as air or an oxygen enriched stream). This oxidation may be carried out at, for example, a temperature greater than 800°C in a suitable reactor (a rotary kiln, multiple hearth roaster or a circulating fluidised bed).

Without wishing to be bound to any particular theory, it is thought that pre-oxidation may enhance the reduction of metal oxides in, for example, ilmenite by causing a change in the structure and reactivity of the oxide surface.

It will be understood that the percentage of metal in the metal-containing material will vary depending on the particular material. Typically, the metal oxide and/or sulphide will comprise up to 95 wt.% of the metal-containing material, for example from 20 to 60 wt.%.

Typically, electrical energy (e.g. electrical resistive heating elements) or fuels in the form of a solid, liquid or gas are be used to heat (convective and/or conductive and/or radiative) the metal-containing material. These methods are well known in the art.

Examples of suitable solid fuels include one or more of coal and cellulosic materials such as timber or saw dust. Coal includes lignite, bituminous coal, coke, anthracite and carbonised coal.

Examples of suitable liquid fuels include one or more of fuel oil, light fuel oil, heavy fuel oil, diesel and kerosene.

Examples of suitable gaseous fuels include natural gas, which may be treated to form synthetic gas, producer gas or reformer gas.

The metal-containing material is heated to a temperature lower than the melting point of the material, so that the metal-containing material is in the solid-state throughout the reduction process. The metal-containing material is heated by said convective and/or conductive and/or radiative means to a temperature that does not exceed 1,200°C. The metal-containing material is preferably heated by said convective and/or conductive and/or radiative means to a temperature that does not exceed approximately 850°C, more preferably a temperature that does not exceed approximately 650°C. For example, the metal-containing material may preferably be heated by said convective and/or conductive and/or radiative means to a temperature in the range of from 400 to 850°C.

The inventors have observed that the most significant improvement in the kinetics and extent of metallisation and/or reduction are observed at low temperatures, preferably less than 850°C, more preferably less than 650°C.

At these low temperatures using conventional reduction methods, iron oxide which has been weathered to form predominantly Fe(III) oxide will be metallized by both conventional and dielectric methods. However, iron-containing ilmenite, which is essentially $FeO.TiO_2$, in which the iron has not been weathered (oxidised to Fe(III)) is not observed to be reduced by conventional methods. It is only observed to be reduced under the dielectric conditions of the present invention.

In the present invention, the heating of the metal-containing material by convective and/or conductive and/or radiative means preferably excludes the use of MW or RF energy (dielectric heating) to significantly heat the metal. Advantageously, exposing the metal-containing material to MW and/or RF energy (dielectric energy) raises the temperature by less than 50°C, more preferably by less than 20°C, still more preferably less than 10°C, most preferably less than 5°C.

The MW and RF energy used in the present invention are chosen such that upon exposing the metal-containing material to MW and RF the material and/or system is not significantly heated.

Depending on the material to be processed, the inventors have found that there is a window of MW and RF energies within which there is observed a significant increase in the kinetics and/or extent of metallisation without substantial heating of the material and/or the system. Outside this window, the application of MW and RF energy heats the material to a significant degree. It will be appreciated, that the power densities for the MW and RF are lower than would be required to heat the material.

It is well known that RF and MW radiation occupy adjacent sections of the electromagnetic spectrum, with MWs having higher frequencies than radio waves. Several frequencies have been set aside by International Treaties, such as ISM (Industrial, Scientific and Medical). These are internationally agreed and recognised frequency bands, known as ISM bands, or Industrial, Scientific and Medical Bands. ISM defines RF bands as:

(i) 13.56 MHz $\pm$ 0.05%
(ii) 27.12 MHz $\pm$ 0.6%
(iii) 40.68 MHz $\pm$ 0.05%

and MW bands as:

(i) 896 MHz
(ii) 915 MHz
(iii) 2450 MHz $\pm$ 50 MHz

It has been found that exposing a metal-containing material to RF and/or MW ISM bands described above results in an increase in the kinetics and/or percentage of the reduction and/or metallisation reaction without significantly heating said material and/or the system. Preferably, the RF band is 13.56 MHz $\pm$ 0.05%.

In the case of large, industrial scale machines the MW band is preferably 896 MHz or 915 MHz. However, in smaller laboratory scale machines, it may be preferable for the MW band to be 2450 MHz $\pm$ 50 MHz.

MW and RF can be differentiated with reference to the methods of producing the high frequency fields. Microwave systems utilise magnetrons and klystrons to generate the electromagnetic field, and resonant and non-resonant cavities to apply the field. Radio frequency systems use high power valves to generate the electromagnetic field, and capacitors and electrodes to apply the field.

The MW and RF energy may be applied independently of one another, or in combination, over a range of electric field strengths and field strength ratios.

In the prior art relating to processing minerals in a microwaved energised fluidised bed, it is taught that high electric field strengths, in the region of $10^6 Vm^{-1}$ are desirable. Furthermore, it is taught that Q values should be as high as possible. The "Q" factor is the ratio of electromagnetic energy stored to electromagnetic energy dissipated. Typically the prior art teaches towards minimum Q values of 20,000.

In contrast to the prior art, the inventors have found that low Q values, preferably in the region of 1 to 1,600 are advantageous. The specific range of Q values for a given experiment will depend on the materials present in the cavity. Furthermore, it is preferable for the RF and MW to have low electric field strengths.

Preferably the peak electric field strength of the MW energy applied to cavity does not exceed 5,000 $Vm^{-1}$,

more preferably it does not exceed 1,500 Vm$^{-1}$, most preferably it does not exceed 850 Vm$^{-1}$.

Preferably the peak electric field strength of the MW energy applied to the cavity is in the range of from 300 to 5,000 Vm$^{-1}$, more preferably from 500 to 3,000 Vm$^{-1}$.

Preferably the peak electric field strength of the RF energy applied to the cavity does not exceed 100,000 Vm$^{-1}$, more preferably it does not exceed 25,000 Vm$^{-1}$, most preferably it does not exceed 12,000 Vm$^{-1}$.

Preferably the peak electric field strength of the RF energy applied to the cavity is in the range of from 3,000 to 100,000 Vm$^{-1}$, more preferably in the range of from 4,500 to 60,000 Vm$^{-1}$.

Preferably, the electric field strength ratio of MW energy:RF energy is from 1:4 to 1:20.

Without wishing to be bound to any particular theory, it is believed that exposing the metal-containing material to MW and/or RF energy changes the structure of the material to make it more amenable to being reduced by the reducing agent. At relatively low power levels, it has surprisingly been observed that while there is little or no additional heating by the MW and RF sources, the metallisation of the ore or concentrate is significantly improved.

It is important to understand that there is a distinction between induction heating and dielectric heating. In induction heating, the workpiece or load to be heated forms a resistive secondary of a transformer which has the induction heating coil as its primary. In contrast, in dielectric heating, the load to be heated forms a lossy capacitor, which is coupled to an applicator capacitor. In induction heating it is the magnetic field from the coil which induces the electric currents in the resistive load whereas in dielectric heating, it is the electric field produced between the plates of the applicator which leads to the heating effect. As a consequence, induction heating is characterised by large electric currents (and magnetic fields) whereas dielectric heating is characterised by high voltages (and electric fields). Preferably, inductive heating, which is usually generated with a high frequency source typically with oscillators of high power, operating at $10^6$-$10^7$ Hz, is not used in the present invention to convectively and/or conductively and/or radiatively heat the metal-containing material in the present invention. Inductive heating is excluded in the present invention from the term "exposing said metal-containing material to RF energy". In the present invention, preferably dielectric heating is not used to significantly heat the metal-containing material.

The metal-containing material may be heated by said convective and/or conductive and/or radiative means before exposing said material to MW energy and/or RF energy. Alternatively, the metal-containing material may be exposed to MW energy and/or RF energy before the metal-containing material is heated by said convective and/or conductive and/or radiative means. Alternatively, or in combination, the metal-containing material may be exposed to MW and/or RF energy while heating said material by said convective and/or conductive and/or radiative means.

Preferably, the metal-containing material is exposed to MW energy, RF energy, and is heated by said convective and/or conductive and/or radiative means simultaneously.

The reducing agent may be a solid, liquid or gas. Preferably, the reducing agent is a solid or a gas, most preferably a gas.

Examples of suitable solid reducing agents include one or more of carbon, bitumen, coal, coke and anthracite. Examples of suitable gaseous reducing agents include one or more of carbon monoxide, carbon dioxide, hydrogen, and hydrocarbons. Preferably, the reducing gas comprises carbon monoxide and/or hydrogen, more preferably the gas is or comprises hydrogen.

The reducing agent (solid and/or liquid and/or gas) may be comprised in the metal-containing material.

If the reducing agent is a gas, the gas may be continuously introduced into a reaction cavity, in which the metal-containing material is situated. The reducing gas reduces the oxidised metal in the metal-containing metal. The out-gas may be continuously removed from the reaction cavity.

Preferably, sufficient reducing gas is passed over the metal-containing material to maintain a stoichiometric excess of reducing gas to oxidised metal ions in the metal-containing material.

A preferred embodiment of the present invention concerns a process for reducing iron oxide in ores and/or concentrates. The reduction reactions are preferably conducted at a temperature of from 250°C to 1200°C, more preferably from 300°C to 950°C, and most preferably from 400°C to 850°C. The reduction reaction may be carried out in a reducing gas atmosphere, preferably in a hydrogen atmosphere. The metal-containing material is exposed to low intensity MW and RF frequency energy, preferably a MW energy of approximately 2450 MHz for small scale reactions and 896 MHz or 915 MHz for large scale reactions, and a RF energy of approximately 13.56 MHz.

The present invention will now be described further, by way of example only, with reference to the following drawings, in which:

Figure 1 is a block flow diagram of one embodiment of the invention.

Figure 2 shows a comparison of the measured furnace and sample temperatures under an applied MW and RF field.

Figure 3 shows the kinetics for metallisation of ilmenite under hydrogen as a function of temperature (MW power is 900W and RF power is 300W).

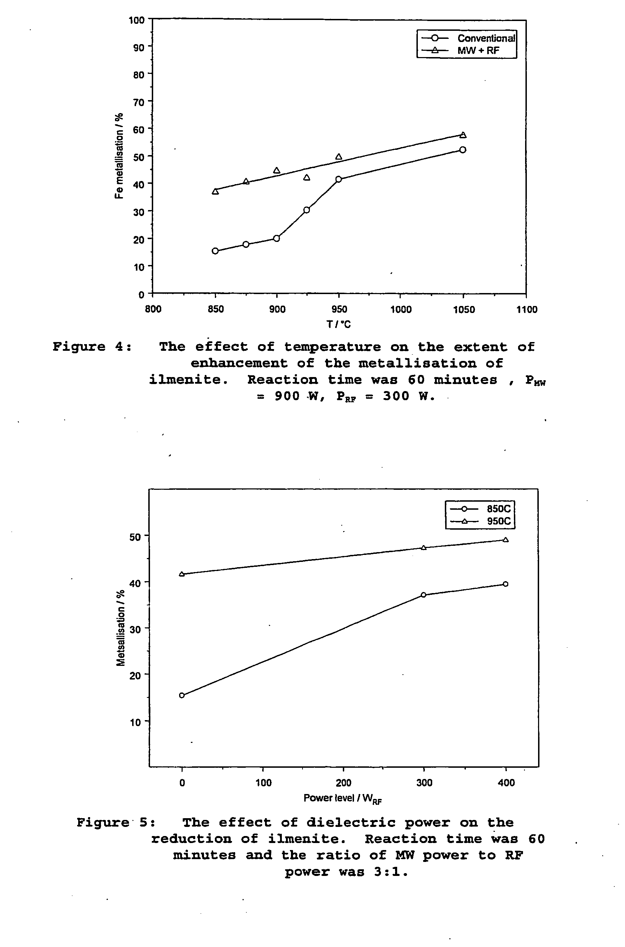

**Figure 4** shows the effect of temperature on the extent of enhancement of the metallisation of ilmenite.

**Figure 5** shows the effect of dielectric power on the reduction of ilmenite.

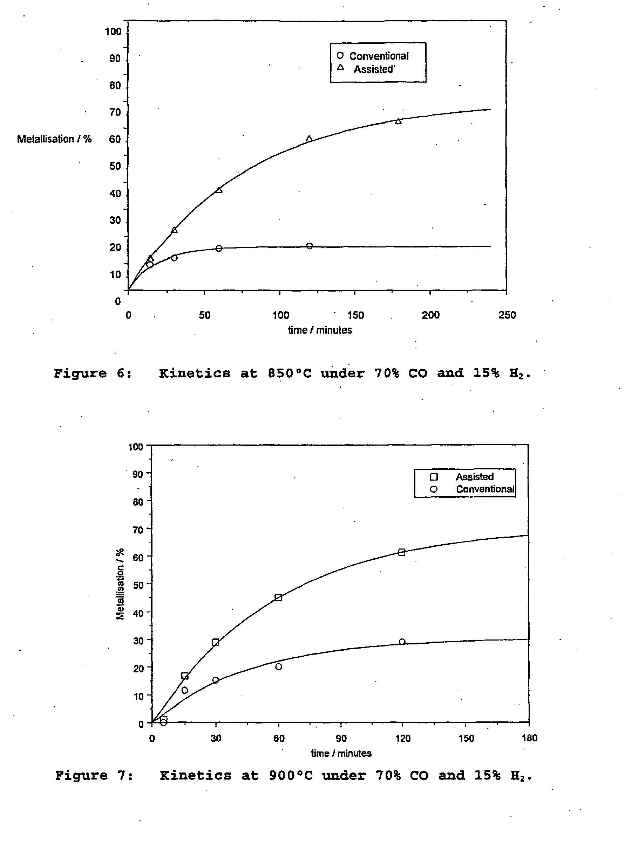

**Figure 6** shows the metallisation kinetics of ilmenite at 850°C under 70% CO and 15% $H_2$.

**Figure 7** shows the metallisation kinetics of ilmenite at 900°C under 70% CO and 15% $H_2$.

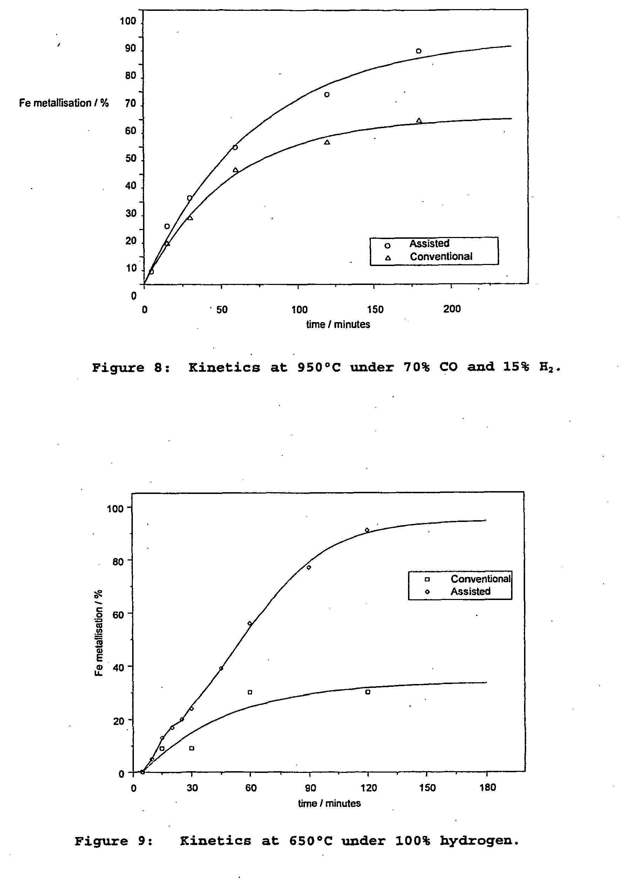

**Figure 8** shows the metallisation kinetics of ilmenite at 950°C under 70% CO and 15% $H_2$.

**Figure 9** shows the metallisation kinetics of ilmenite at 650°C under 100% hydrogen.

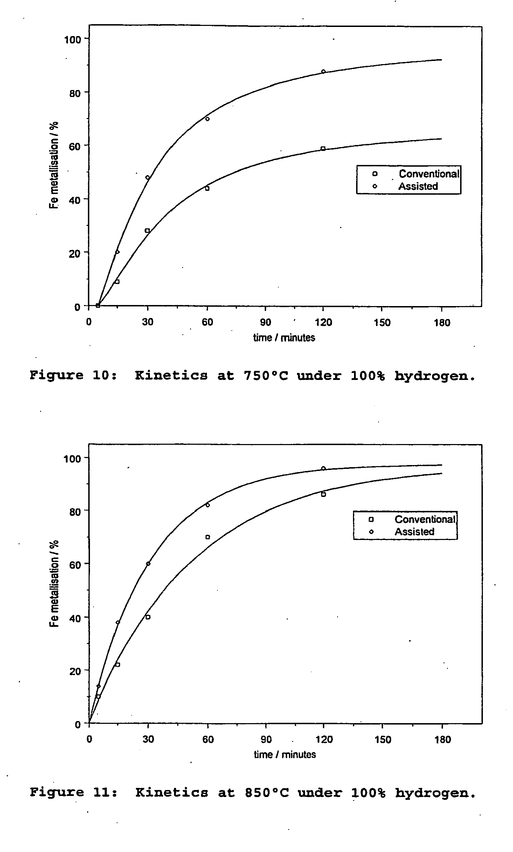

**Figure 10** shows the metallisation kinetics of ilmenite at 750°C under 100% hydrogen.

**Figure 11** shows the metallisation kinetics of ilmenite at 850°C under 100% hydrogen.

**Figure 12** shows the effect of the preoxidation temperature on mass loss (metallisation).

**Figure 13** shows the effect of reduction temperature.

**Figure 14** show the effect of power on the reduction of ilmenite pre-oxidised at 950°C and then reduced under hydrogen at 600°C and 750°C over a 60 minute period.

**Figure 15** shows the reduction kinetics of pre-oxidised ilmenite calcine at 600°C under hydrogen after pre-oxidation at 950°C.

**Figure 16** shows the effect of temperature on the reduction kinetics under hydrogen after pre-oxidation at 950°C.

**Figure 17** shows the effect of the reduction temperature on metallisation after pre-oxidation at 950°C for 60 minutes.

**Figure 18** shows the metallisation kinetics of pre-oxidised ilmenite calcine at 850°C after pre-oxidation at 950°C.

**Figure 19** shows the particle size distribution for the titaniferous magnetite sample. The +106 μm -1700 μm fraction (shaded) was used in fluidised bed reactor experiments.

**Figure 20** shows metallisation of magnetite under hydrogen at 600°C

**Figure 21** shows indicative enhancement ratio as a function of temperature.

**Figure 22** shows the effect of MW power on the enhancement of magnetite metallisation.

**Figure 23** shows the effect of RF power on the enhancement of magnetite metallisation. The mass loss is a direct measurement of the reduction and metallisation.

**Figure 24** shows reduction of hematite iron ore fines under hydrogen. Forward $P_{MW}$ = 900 W and $P_{RF}$ = 300 W.

**Figure 25** shows the effect of temperature on the extent and kinetics of the reduction of Hematite iron ore fines under carbon monoxide.

**Figure 26** shows the comparison of the mass losses for the reduction of Hematite iron ore fines under hydrogen and under carbon monoxide.

**Figure 27** shows the particle size distribution of the limonitic nickeliferous laterite sample showing the size fractions used in the test work.

**Figure 28** shows the comparison of the reduction of ferric iron under conventional and dielectric assisted conditions.

**Figure 29** is a comparison of the formation and reduction of ferrous iron under conventional and dielectric assisted conditions.

**Figure 30** is a comparison of the formation of metallic iron under conventional and dielectric assisted conditions.

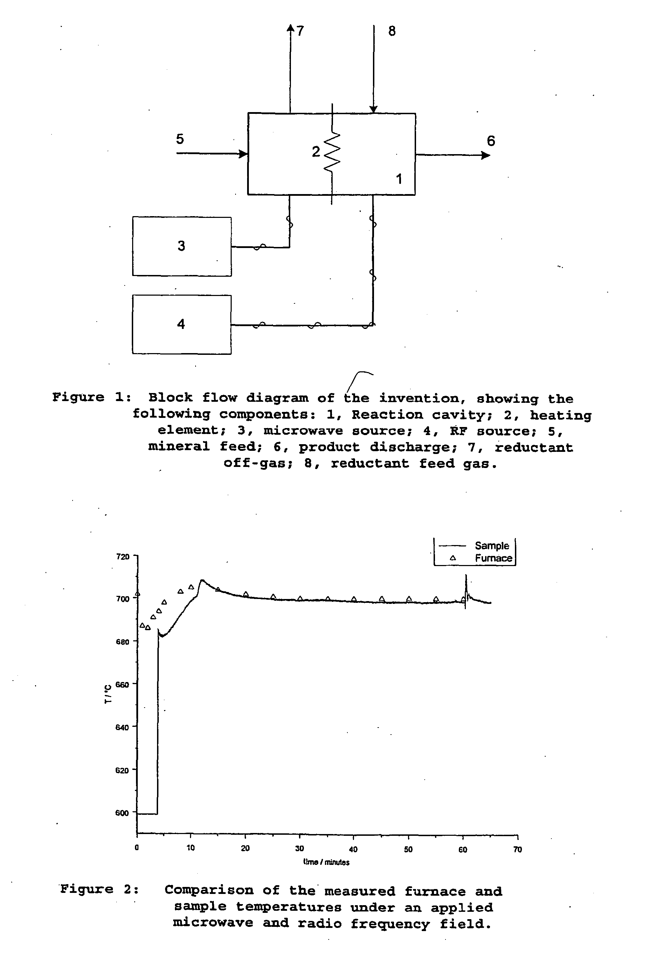

The present invention may be further understood with reference to the block diagram shown in Figure 1. This diagram shows an embodiment of the present invention comprising: a reaction cavity 1; a heating element 2; a MW source 3; a RF source 4; a mineral feed 5; a product discharge 6; a reductant off-gas 7; and a reductant feed gas 8.

Each component of this diagram will be discussed in more detail below.

The reaction cavity 1 is for containing the metal-containing material. It will also provide a confinement for both MW and RF energy.

The heating element 2 is positioned to enable the metal-containing material to be heated by convective and/or conductive and/or radiative means. The heating element 2 may utilise resistive heating elements, gas, liquid or solid combustion.

The MW source 3 and RF source 4 are coupled to said cavity 1 to enable the metal-containing material, when positioned in said cavity, to be exposed to MW and RF energy.

The MW and RF energy are preferably controllable independently of one another, and independently of the conductive and/or convective and/or radiative heating means.

The mineral feed 5 provides an inlet into the cavity 1 through which the metal-containing material may be introduced to the cavity.

The product discharge 6 provides an outlet through which the reduced material may be discharged. Preferably this reduced material will comprise metal in the metallic state.

The inlet and outlet are designed to prevent, or at least minimise, MW radiation from leaving the cavity.

The reductant feed gas 8 may be continuously fed into the reaction cavity 1, where it reacts with the metal-containing material. The reductant off-gas may also be continuously removed from said cavity 1.

Although conventional furnaces may be adapted for use in the present invention, hybrid furnaces, such as those described in EP 0 914 752, are preferred.

EP 0 914 752 describes a RF and MW assisted furnace. Previous uses of this hybrid furnace have been limited to heating of ceramics, ceramic-metal composites, metal powder components, and engineering ceramics. The MW and RF sources are independently controlled and are applied to the furnace chamber. The conventional furnace can be operated independently of the MW and RF sources.

In the prior art, MW energy is known to be used to preferentially heat selected mineral phases of ores. In contrast to this, the heating means used in the present invention substantially avoids preferentially heating specific phases of the metal-containing material. It can be seen in Figure 2 that the MW and RF energy applied to ilmenite does not appreciably heat the ilmenite above the furnace temperature.

The process of the present invention for reducing a metal-containing material has a number of advantages over the processes known in the prior art. One advantage is the enhanced reduction kinetics observed using the process as described herein. In particular, it has been observed that the reduction kinetics of reactions carried out at high temperatures and in the absence of dielectric fields (MW and RF) are slower than the reduction kinetics of reactions carried out in the presence of MW energy and RF energy at the lower temperatures required for the present invention. The corollary of this is significant energy savings in extractive metallurgical processes and reduced emissions. In particular, reduced gaseous emissions are observed which is linked to the reduced specific energy consumption of the present invention.. Moreover, the process achieves a greater degree of metallisation at a given temperature and also allows for metallisation at lower temperatures than currently possible.

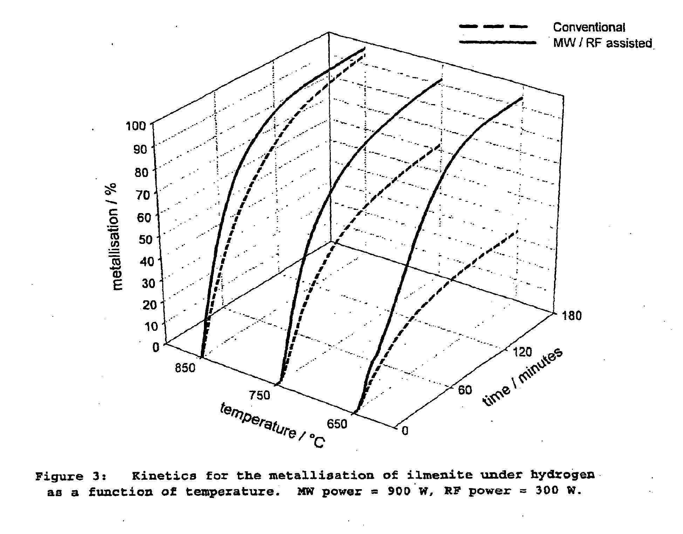

This is exemplified in Figure 3, which shows a significant improvement in the kinetics and extent of metallisation of ilmenite at low temperatures compared with using conventional reduction processes (i.e. in the absence of MW or RF energy). The improvement may be observed at 850°C. However, the improvement is more significant at 750°C, and even more so at 650°C.

The present invention will be further illustrated with reference to the following non-limiting Examples.

A general procedure for the experiments as described herein is given below.

The MW generator (2.0kW at 2.450GHz) used in the experiments was a SAIREM Model GMP 20T.

The RF generator (1 kW at 13.56MHz) used in the experiments was a RF Power Products Model R10S(75 207 09 040).

The RF Matching Box (13.56MHz) was a RF Power Products Model SPR876 (76 226 59 010).

The radiant heating system was a Kanthal Super 1800 rated at 11.8 V, 0.58kW. Six elements were required for a load of 3.5kW at 48A with the elements wired in series.

The radiant element dimensions were as follows:

LU 180mm terminal length;

LE 200mm heating zone length;
A 30mm distance between shank centres; and
Approximately 69g in weight.

The control system used a Eurotherm Thyristor Model 461 240V, 25A. The Eurotherm dual loop temperatures controller model 900EPC, and thermocouple type R was used.

The kiln had the following dimensions: 460 x 480 x 540 mm.

The cavity used in the experiments was designed to be an efficient applicator for the microwave field, minimising the losses of electromagnetic energy to the cavity shell and maximising the dissipation of electromagnetic energy into the cavity load. Additionally, the cavity contains the radio frequency applicator in the form of electrodes or otherwise. The cavity is designed in such a manner as to prevent the microwave field from accessing the radio frequency tuning components, such as inductors and matching capacitors.

Within the cavity there is insulating fibre board (Rath KVS 161/302), Superkanthal resistance heating elements, a quartz muffle, and when the sample is inserted, a quartz crucible and quartz gas supply line. The mineral sample of interest rests in the crucible.

The furnace temperature is set to the specified temperature. Time is allowed for the furnace conditions to stabilise. The sample is weighed and poured into the sample holder. The sample holder containing the sample is mounted onto the gas supply tube in the sample chamber and the sample chamber is closed. The sample chamber and muffle is purged with nitrogen before the appropriate gas mixture is introduced. Where applicable MW and/or RF are introduced into the furnace cavity at this stage. In the examples when MW and/or RF were applied, the MW and/or RF generators were switched on before insertion of the sample into the cavity. At the start of the experiment the sample holder is raised into the furnace. Relevant data is recorded during the experiment. After the specified reaction time the sample is lowered out of the furnace into the sample chamber. The sample chamber and muffle is purged with nitrogen and the sample is allowed to cool. The sample is weighed after the experiment and the weight loss is calculated. Selected samples are prepared for sample analysis.

With reference to field strengths, specific forward microwave and RF power levels were applied. The forward power levels from the generator and the reflected power levels were measured. In all experiments, unless stated otherwise, all power levels referred to are forward power levels. Additionally, MW power was adjusted to 900 W and RF power was adjusted to 300 W.

The actual electric field strength at the sample was not measured. Instead, the peak electric field strength was calculated according to the following equation:

$$P = \frac{E_{max}^2 V_c \omega \varepsilon_0}{4Q_0}$$

Where:

$E_{max}$ is the maximum electric field strength
P is the dissipated field power
$V_C$ is the volume of the field cavity
$Q_0$ is the "quality factor" of the field cavity. The Q factor for RF and MW assisted cavities when the cavity is empty is low, between 2 and 20, averaging 9, as most energy is dissipated within the dielectric load and not stored in the cavity itself.
$\omega$ $2\pi f$, where f is the frequency
f = 915 MHz or 2450 MHz for microwave
f = 13.56 MHz for radio frequency

In the following examples quantitative mass loss data and Mössbauer analyses were used to determine the extent of metallisation. $^{57}$Fe Mössbauer measurements were performed in conventional transmission geometry. A K3 Austin Associates linear motor driven by a triangular reference wave-form was used to scan the resonance profile. A Kr-$CO_2$ (2atm) proportional counter was used to detect the transmitted 14.4 keV resonance radiation from a 50 mCi $^{57}$Co (Rh) radioactive source.

Each sample was mounted in a specially designed powder-clamp holder ($\phi$=1.5 cm). Sample quantities of 40-50 mg were ground under acetone in an agate pestle and mortar, thoroughly mixed with an inorganic buffer material and the mixture of sample and buffer distributed in the sample holder to form a disk of uniform thickness for transmission Mössbauer measurements.

Typical count-rates in the discriminator window set to select the 14.4 keV resonance radiation were in the range 10000 counts/sec. Data acquisition of each spectrum and its mirror-image continued for a period of 6 - 12 hours to obtain several hundred thousand counts in each of 1024 channels of a PCA-based multi-channel analyser. X-scale velocity (energy) calibration was by means of a 25-$\mu$m thick $\alpha$-Fe foil measured before and after the series of measurements which gave a line width of $\Gamma$=0.27mm/s. Prior to analysis each spectrum was folded with it's mirror image and adjacent channels subsequently added. This serves to remove geometrical.base-line distortions and reduces the ($\sqrt{N}$) statistical scatter in the final data-set used for analysis. The fitting program, NORMOS, has been used for theoretical fits of the data with Lorentzian line shapes to deconvolute various sub-components (phases) in the spectrum.

In Examples 1 to 4 a sample of ilmenite concentrate was reduced using the process of the present invention. The results were compared with experiments conducted under the same conditions, but in the absence of MW or RF energy. The ilmenite sample used in experiments 1 to 4 is described below.

The particle size distribution of the ilmenite sample as determined by dry screening is shown in Table 1.

**Table 1: Particle size distribution of the ilmenite sample.**

| Sieve size range/$\mu$m | Mass/% |
|---|---|
| +300 | 0.61 |
| -300+212 | 1.27 |
| -212+150 | 5.48 |
| -150+106 | 42.22 |
| -106+75 | 46.88 |
| -75 | 3.54 |

The moisture content of the ilmenite sample, as determined by a Mettler Toledo HR73 moisture analyser at 120°C, is 0.32%. Weight loss at 950°C in a $N_2$ atmosphere is 0.60%. The testing time at 950°C was 60 minutes.

The mineral analysis in Table 2 conducted on the ilmenite sample revealed that the main phases present are ilmenite (80.36%), altered ilmenite (4.73%) , Ti-Hematite (11.48%) and rutile (0.41%). Mössbauer analysis supports the mineral analysis indicating the presence of 73% $Fe^{2+}$ and 11% $Fe^{3+}$ as ilmenite and 16% $Fe^{3+}$ as hematite.

**Table 2 Chemical and mineral analysis of ilmenite sample.**

| Parameter | Concentration/% |
|---|---|
| **Chemical analysis** | |
| Ti | 28.50 |
| Fe | 37.53 |
| Si | 0.99 |
| Mg | 0.28 |
| Al . | 0.27 |
| **Mineral abundance** | |
| Ilmenite | 80.36 |
| Altered ilmenite | 4.73 |
| Ti - Hematite | 11.48 |
| Rutile | 0.41 |
| Iron metal | 0.00 |
| **Fe phase abundance** | |
| $Fe^0$ as iron metal | 0.00 |

(continued)

| Fe phase abundance | |
|---|---|
| $Fe^{2+}$ as ilmenite | 73.00 |
| $Fe^{3+}$ as ilmenite | 11.00 |
| $Fe^{3+}$ as hematite | 16.00 |

## Example 1

### Reduction of ilmenite under CO/$H_2$

Tests were conducted at temperatures between 850°C and 1050°C under a reducing atmosphere composed of 70% CO, 15% $H_2$ and 2% $CO_2$ with the balance comprised of nitrogen.

Samples were placed into a fluidised bed reactor, which was then inserted into the hybrid furnace. Reduction reactions were conducted under conventional conditions (i.e. in the absence of any MW and RF fields) and under dielectric conditions (i.e. in the presence of MW and RF fields). The effects of temperature and dielectric power on the extent of metallisation and the metallisation kinetics were investigated and compared, as shown in the following figures (4 to 8).

## Example 2

### Reduction of ilmenite under hydrogen

Tests were conducted at temperatures between 650°C and 850°C under a reducing atmosphere composed of 100% $H_2$. Samples were placed into a fluidised bed reactor, which was then inserted into the hybrid furnace. Reduction reactions were conducted under conventional conditions (i.e. in the absence of any MW and RF fields) and under dielectric conditions (i.e. in the presence of MW and RF fields). The effects of temperature and dielectric power on the extent of metallisation and the metallisation kinetics were investigated and compared, as shown in the following figures (9 to 11).

## Example 3

### Reduction of pre-oxidised ilmenite under hydrogen

Ilmenite was pre-oxidised at temperatures between 600°C and 950°C under air prior to being reduced at 600°C under 100% hydrogen under conventional conditions (i.e. in the absence of any MW and RF fields) and under dielectric conditions (i.e. in the presence of MW and RF fields).

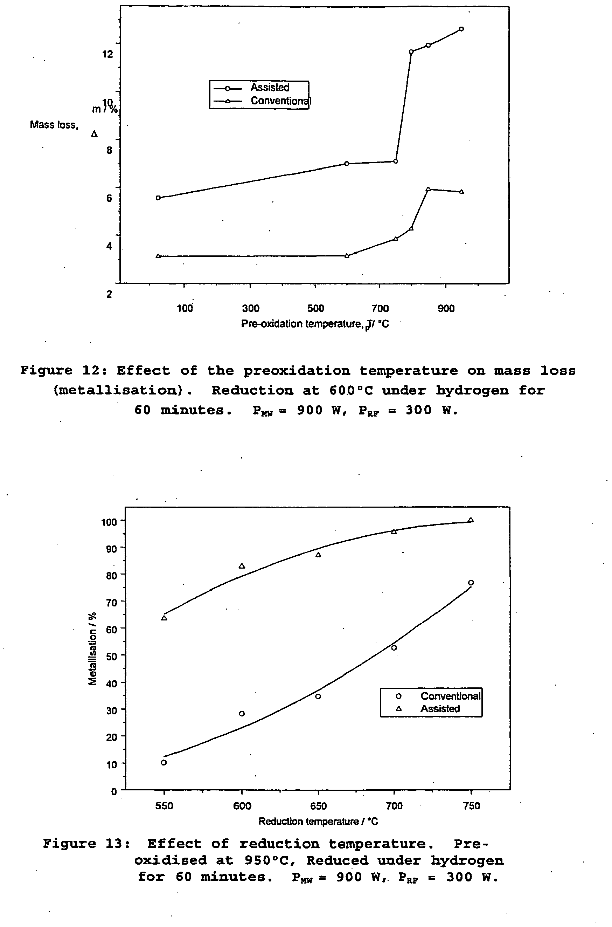

The effect of the oxidation temperature and the application of dielectric assistance during the subsequent reduction on the extent of metallisation is shown in Figure 12.

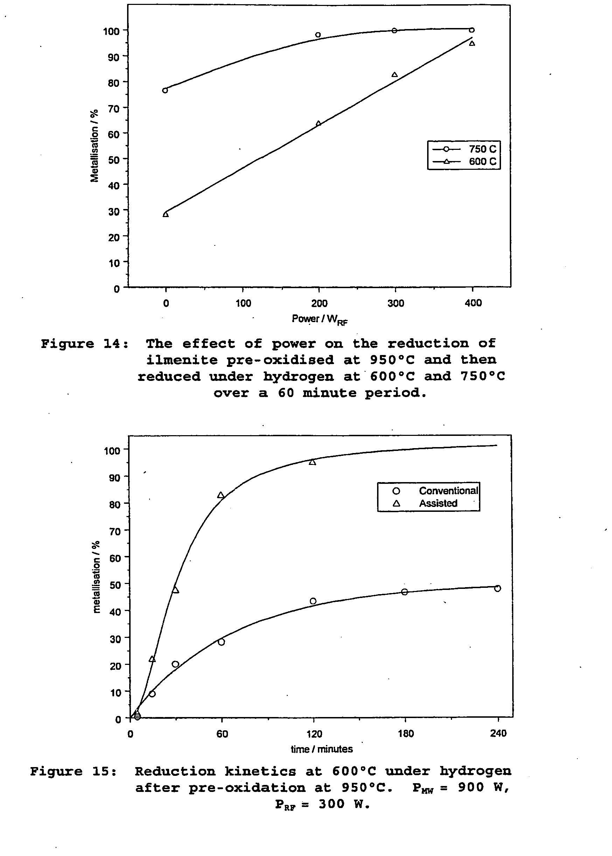

Samples pre-oxidised at 950°C under air over 60 minutes were placed into a fluidised bed reactor, which was then inserted into the hybrid furnace. The samples were then reduced under 100% hydrogen at temperatures between 550°C and 750°C. Reduction reactions were conducted under conventional conditions (i.e. in the absence of any MW and RF fields) and under dielectric conditions (i.e. in the presence of MW and RF fields). The effects of temperature and dielectric power on the extent of metallisation and the metallisation kinetics were investigated and compared, as shown in the following figures 13 to 16.

## Example 4

### Reduction of the pre-oxidised ilmenite calcine under CO

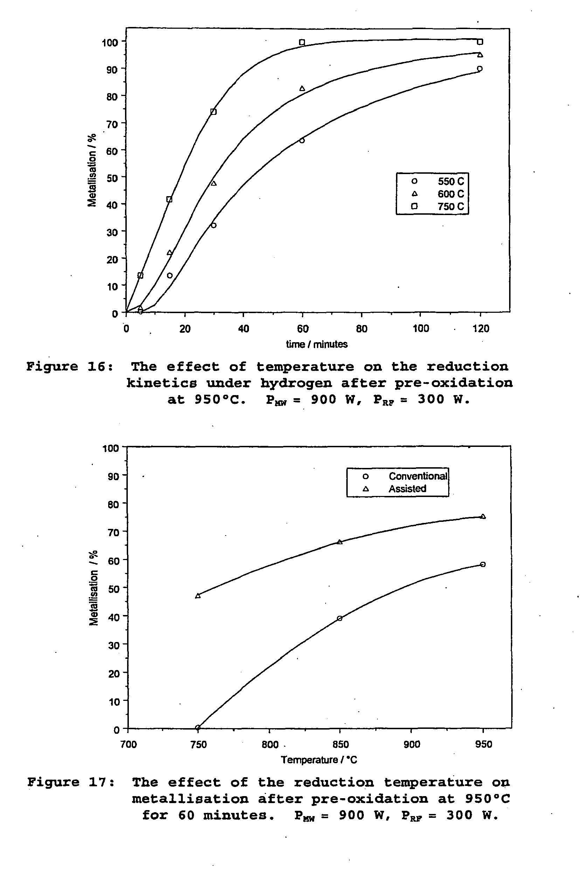

Samples pre-oxidised at 950°C under air over 60 minutes were placed into a fluidised bed reactor, which was then inserted into the hybrid furnace. The samples were then reduced under 100% CO at temperatures between 750°C and 950°C. Reduction reactions were conducted under conventional conditions (i.e. in the absence of any MW and RF fields) and under dielectric conditions (i.e. in the presence of MW and RF fields). The effects of temperature and dielectric power on the extent of metallisation and the metallisation kinetics were investigated and compared, as shown in the following figures 17 to 18.

In Example 5 a titaniferous magnetite ore was reduced under hydrogen and carbon monoxide using the process of the present invention. The results were compared with experiments conducted under the same conditions, but in the absence of MW or RF energy. The magnetite sample used in experiments 5 is described below.

Titanomagnetite and titanomaghemite are the main iron bearing phases in the ore, making up a combined 85% of the ore mass and containing more than 96% of the iron. The ore contains a substantial maghemite ($\gamma$-$Fe_2O_3$) component. The maghemite is closely associated and intensely intergrown with the original magnetite. Maghemite is metastable and inverts to hematite ($\alpha$-$Fe_2O_3$) on heating (200° to 700°C).

Titanium in the ore is predominantly hosted by titanomagnetite and titanomaghemite (93 %), with the remaining 7 % hosted by ilmenite. Combined, the titanomagnetite-titanomaghemite contains on average $\pm$8.2% titanium by mass.

Vanadium in the ore is also predominantly hosted by titanomagnetite and titanomaghemite (>85 %). No other well defined and distinct V-bearing or V-rich phases were identified.

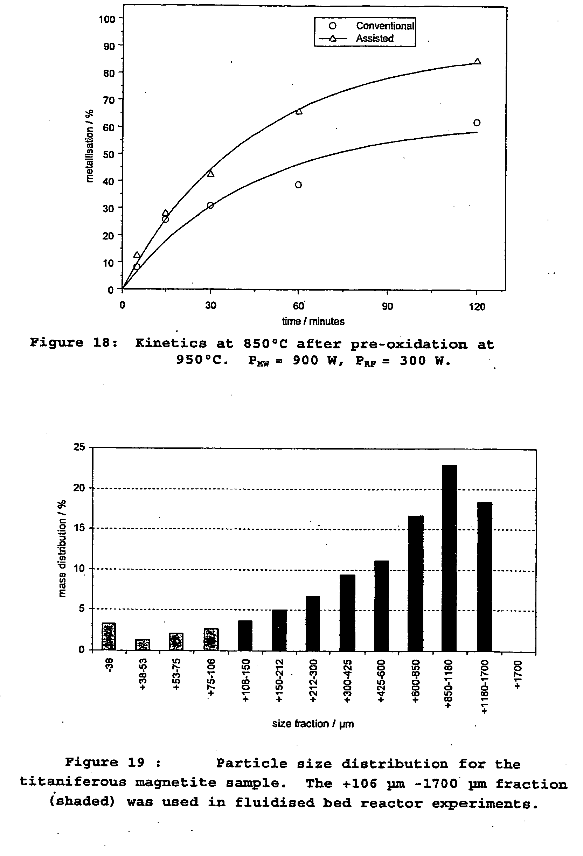

The particle size distribution and the chemical composition of the ore are shown in Table 3 and Figure 19.

**Table 3: Chemical composition of the +106 pm -1700 $\mu$m fraction of the titaniferous magnetite sample.**

| Element | Concentration/% |
|---------|-----------------|
| Fe | 54.4 |
| Ti | 7.82 |
| Si | 2.65 |
| Al | 2.36 |
| Mg | 1.21 |
| V | 1.16 |
| Cr | 0.243 |
| Mn | 0.21 |
| Ca | 0.11 |

## Example 5

### Reduction under hydrogen

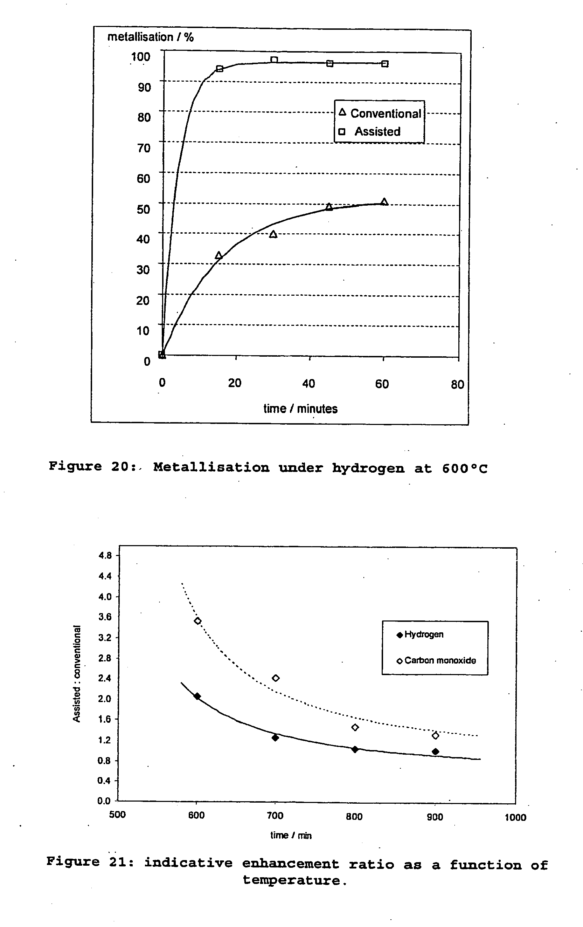

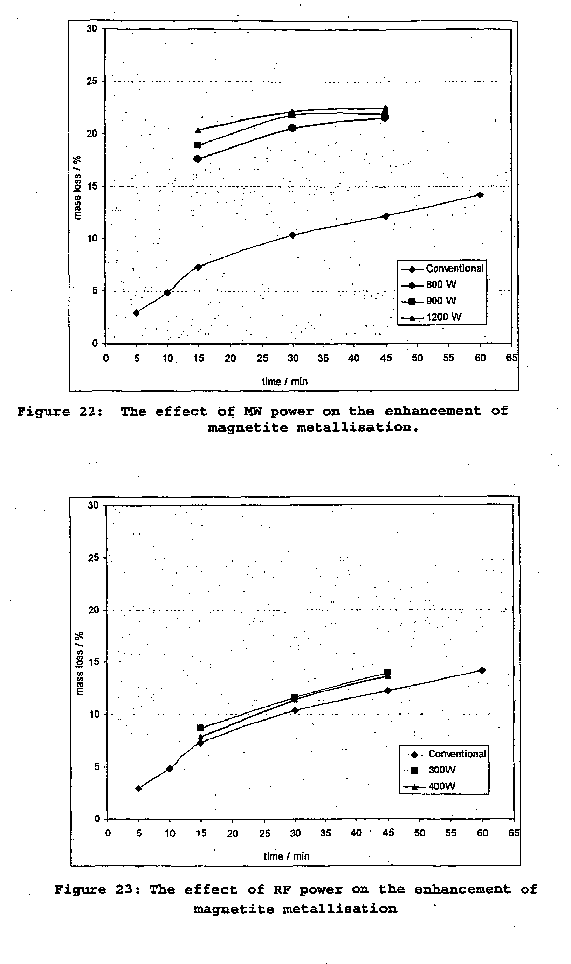

Tests were conducted at temperatures between 600°C and 900°C under a reducing atmosphere composed of 100% $H_2$. Samples were placed into a fluidised bed reactor, which was then inserted into the hybrid furnace. Reduction reactions were conducted under conventional conditions (i.e. in the absence of any MW and RF fields) and under dielectric conditions (i.e. in the presence of MW and RF fields). The effects of temperature and dielectric power on the extent of metallisation and the metallisation kinetics were investigated and compared, as shown in the following figures 20 to 23.

In Examples 6 and 7 a hematite sample was reduced using the process of the present invention. The results were compared with experiments conducted under the same conditions, but in the absence of MW or RF energy. The hematite sample used in experiments 6 and 7 is described below.

The sample consists predominantly of hematite ($\pm$91%), with the remainder comprising mainly silicates (7.1%) and compound phosphates (1.0%). The silicates consist of mainly quartz, mica (muscovite) and kaolinite/pyrophyllite. The compound phosphate mineral appears to be a svanbergite-woodhouseite solid solution phase.

Hematite is thus the main iron bearing phase in the ore, with between 99 and 100 % of the iron hosted by hematite and very minor to trace amounts of associated goethite. The iron associated with the quartz and mica is mainly due to hematite, which is intensely intergrown with these phases. The chemical composition is shown in Table 4.

**Table 4: Chemical composition of the iron ore (hematite) sample.**

| Element | Concentration/% |
|---------|-----------------|
| Fe | 59.2 |
| Si | 4.70 |
| Al | 0.908 |

(continued)

| Element | Concentration/% |
|---------|-----------------|
| V | 0.193 |
| Ca | 0.095 |
| Mg | 0.093 |
| Ti | 0.06 |
| P | 0.053 |

## Example 6

### Reduction of hematite (fines) under hydrogen

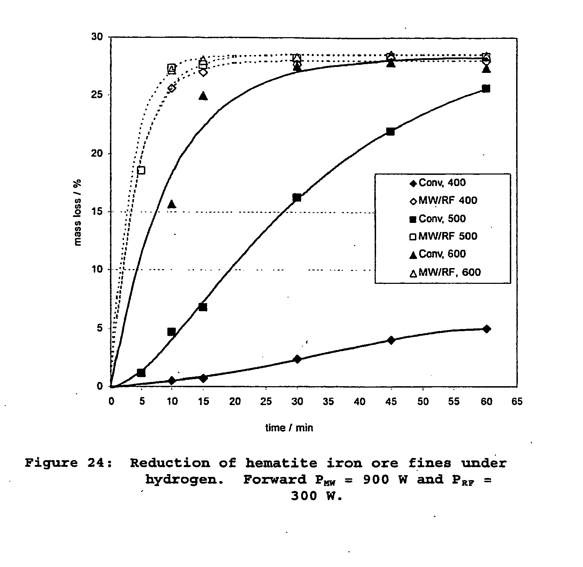

Tests were conducted at temperatures between 400°C and 600°C under a reducing atmosphere composed of 100% $H_2$. Samples were placed into a fluidised bed reactor, which was then inserted into the hybrid furnace. Reduction reactions were conducted under conventional conditions (i.e. in the absence of any MW and RF fields) and under dielectric conditions (i.e. in the presence of MW and RF fields). The effects of temperature and dielectric power on the extent of metallisation and the metallisation kinetics were investigated and compared, as shown in the following figure 24.

## Example 7

### Reduction of fines under carbon monoxide

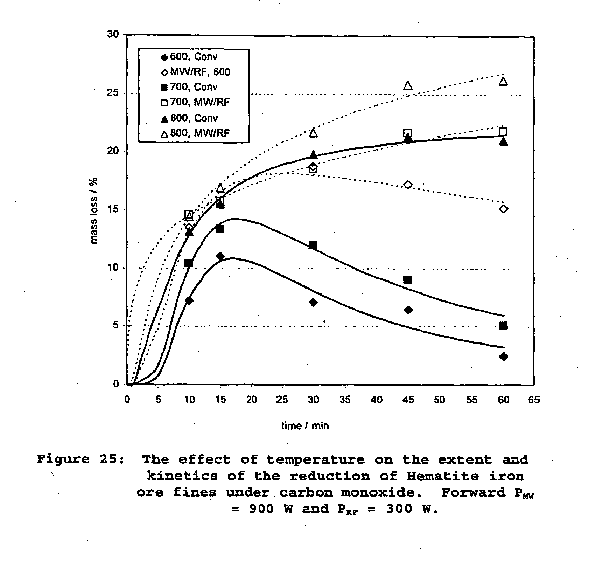

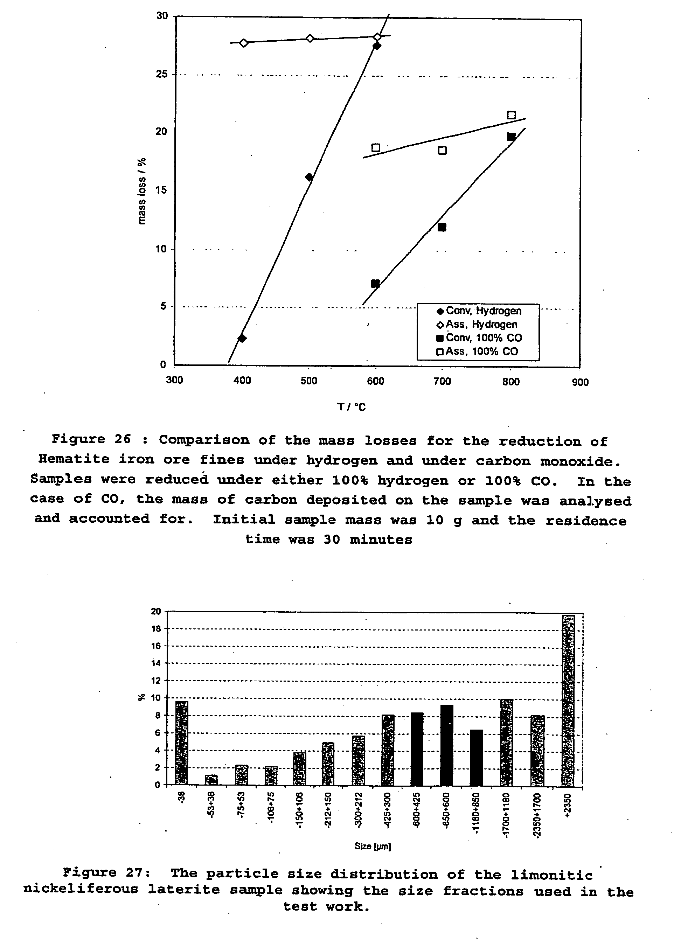

Tests were conducted at temperatures between 600°C and 800°C under a reducing atmosphere composed of 100% CO. Samples were placed into a fluidised bed reactor, which was then inserted into the hybrid furnace. Reduction reactions were conducted under conventional conditions (i.e. in the absence of any MW and RF fields) and under dielectric conditions (i.e. in the presence of MW and RF fields). The effects of temperature and dielectric power on the extent of metallisation and the metallisation kinetics were investigated and compared, as shown in the following figures 25 and 26.

In Example 8 a Limonitic Laterite sample was reduced using the process of the present invention. The results were compared with experiments conducted under the same conditions, but in the absence of MW or RF energy. The Limonitic Laterite sample used in experiment 8 is described below.

The sample was dried and the -1180+425 μm fraction removed for the required test work. This fraction was found to be most suitable in order to limit the loss of fines from the fluidised bed reactor. Unfortunately, the other size fractions were excluded from test work due to this equipment limitation. The particle size distribution of the limonitic nickeliferous laterite sample is shown in Figure 27, illustrating the fractions used in the test work. The moisture content of the sample, as determined by a Mettler Toledo HR73 moisture analyser at 120°C, is 3.23%. Weight loss (after 15 minutes) at 700°C under a nitrogen atmosphere is 14.58%. The weight loss is not only attributed to loss of free moisture but also the loss of chemically bound water and dehydroxylation reactions.

**Table 5: Chemical composition of the limonitic nickeliferous laterite.**

| Element | Concentration/% |
|---------|-----------------|
| Fe | 46.20 |
| Ni | 0.37 |
| Co | 0.05 |
| Si | 4.73 |
| Mg | 0.43 |
| Cr | 1.93 |
| Al | 5.37 |
| Mn | 0.40 |
| Ti | 0.28 |

(continued)

| Element | Concentration/% |
|---------|-----------------|
| C | 0.88 |
| S | 0.04 |

The chemical composition of the head sample complies with the typical chemical composition of a limonitic nickel laterite ore (Table 5). The Si content of the head sample is higher than the typical Si concentration of a limonitic nickel laterite ore.

The limonitic nickeliferous laterite sample consists mainly of goethite, hematite, magnetite, quartz and chromite. The sample is characterised by abundant limonite with lesser quantities of goethite, hematite, magnetite, quartz and Cr-spinel. Limonite is in general an ill-defined phase mainly due to its amorphous nature. It is generally described as an intensely hydrated and amorphous iron oxide. Limonite forms a matrix within which grains and fragments of partly to completely hematitised magnetite, Cr-spinel and quartz are situated. In this sample, limonite is the dominant Fe and Ni bearing phase. It also contains relatively large quantities of Al and Si and often traces or minor amounts Ti and Cr. Goethite and goethite-hematite are present either within the limonite matrix or as discrete secondary oolitic nodules.

The goethite nodules are usually surrounded by a film of limonite. The goethite hosts some Ni.

The magnetite fragments and grains were hematitised to variable degrees. Very fine Ni-metal inclusions occur within the preserved magnetite remnants and are possibly an inherent geological component of the rock.

Chromite (Cr-spinel) fragments and grains are quite common and mostly occur as inclusions within the limonite matrix. The chromite is often transected by partly hematitised magnetite veins. The chromite is occasionally surrounded by a Cr-rich goethite film. The Cr-spinel typically contains substantial amounts of Al, Fe and Mg.

## Example 8

**Reduction of the limonitic nickeliferous laterite sample**

Tests were conducted 700°C under a reducing atmosphere composed of 18% CO, 50% $H_2$, 2% $CO_2$, balance nitrogen.

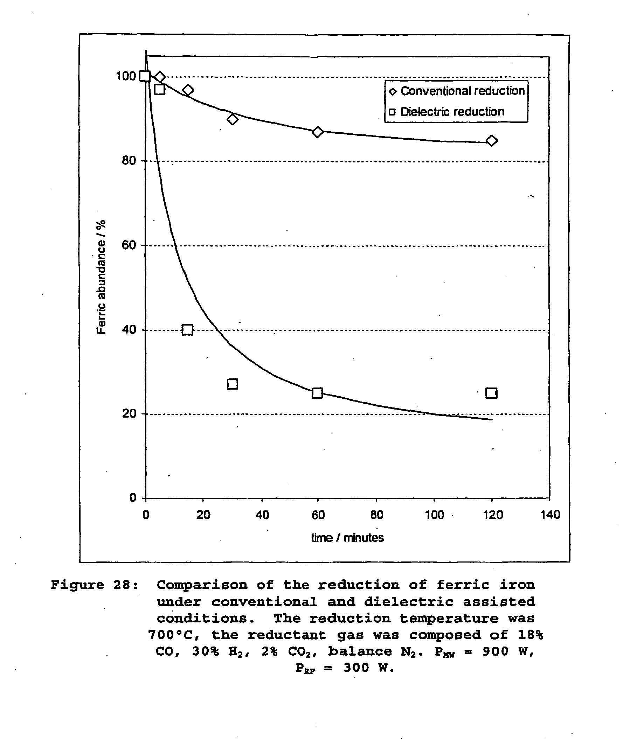

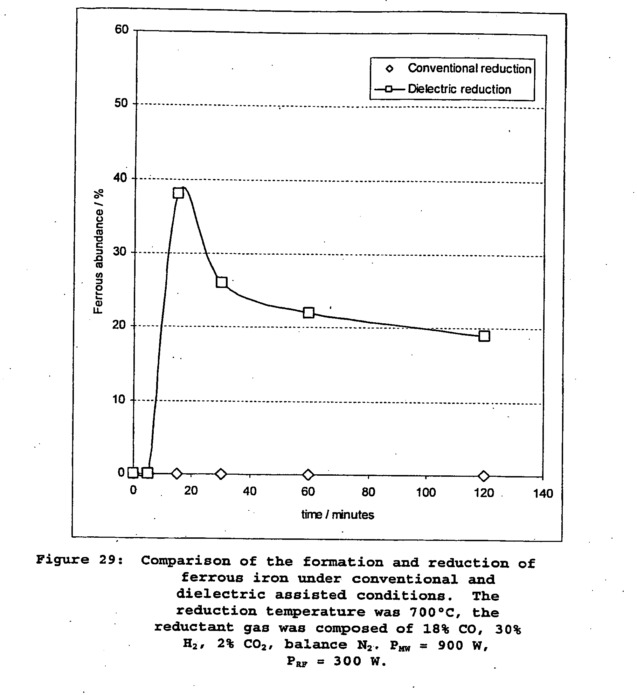

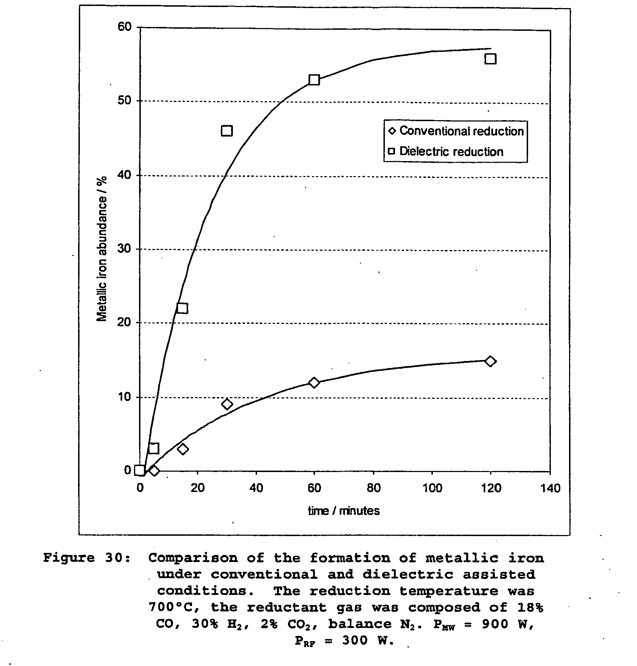

Samples were placed into a fluidised bed reactor, which was then inserted into the hybrid furnace. Reduction reactions were conducted under conventional conditions (i.e. in the absence of any MW and RF fields) and under dielectric conditions (i.e. in the presence of MW and RF fields). The effects of dielectric power on the extent of metallisation of the iron and the reduction kinetics for feric and ferrous iron were investigated and compared, as shown in the following Figures 28 to 30.

## Claims

1. A process for reducing a metal-containing material, the process comprising;
   providing a metal-containing material in a reaction cavity,
   heating said metal-containing material by convective and/or conductive and/or radiative means to a reduction temperature less than 1200°C,
   exposing said metal-containing material to microwave (MW) energy in the reaction cavity,
   exposing said metal-containing material to radio frequency (RF) energy in the reaction cavity, and
   exposing said metal-containing material to a reducing agent in the reaction cavity,
   wherein exposing the metal-containing material to MW and/or RF energy does not significantly heat said material, in that its temperature is raised by less than 50°C.

2. The process according to claim 1, wherein the metal-containing material comprises an ore or a concentrate, said metal containing material optionally comprising iron.

3. The process according to claim 2, wherein the ore is selected from one or more of ilmenite, titaniferous magnetite, iron ore, limonitic laterites, magnetite, maghemite, hematite and saprolitic laterites.

4. The process according to any one of the preceding claims, wherein the metal-containing material is heated by said convective and/or conductive and/or radiative means to a temperature that does not exceed 850°C.

5. The process according to claim 4, wherein the metal-containing material is heated by said convective and/or conductive and/or radiative means to a temperature in the range of from 400 to 850°C.

6. The process according to claim 1, wherein exposing the metal-containing material to MW and/or RF energy heats said material less than 10°C.

7. The process according to any one of the preceding claims, wherein the peak electric field strength of the MW energy applied to the cavity is in the range of from 300 to 5, 000 Vm$^{-1}$.

8. The process according to any one of the preceding claims, wherein the peak electric field strength of the RF energy applied to the cavity is in the range of from 3,000 to 100, 000 Vm$^{-1}$.

9. The process according to any one of the preceding claims, wherein the reducing agent comprises a gas selected from carbon monoxide and/or hydrogen.

10. The process according to any one of the claims 1 to 8, wherein the reducing agent comprises a solid material comprising carbon.

11. The process according to any one of claims 1 to 10, wherein the reducing agent is comprised in the metal-containing material.

12. The process according to any one of the preceding claims, wherein the metal-containing material is heated by said convective and/or conductive and/or radiative means before exposing said material to MW energy and/or RF energy.

13. The process according to any one of claims 1 to 14, wherein the metal-containing material is exposed to MW and/or RF energy while heating said material by said convective and/or conductive and/or radiative means.

14. The process according to any one of the preceding claims, wherein the metal-containing material is exposed to MW energy and RF energy simultaneously.

15. An extractive metallurgical process for the chemical reduction of an iron-containing ore or concentrate, the process comprising:

    providing an iron-containing ore or concentrate in a reaction cavity,
    heating said ore or concentrate by convective and/or conductive and/or radiative means,
    exposing said ore or concentrate to a reducing agent in the reaction cavity, whereby some or all of said ore or concentrate is reduced to iron,
    **characterised in that** said ore or concentrate is also exposed to microwave (MW) energy and radio frequency (RF) energy in the reaction cavity concurrently with said heating of said ore or concentrate, the MW and RF energy levels being selected so that there is little or no additional heating of said ore or concentrate, **in that** the temperature of the ore or concentrate is raised by less than 50°C,
    and **in that** the temperature of said ore or concentrate does not exceed 850°C, preferably 650°C, during the reduction process.

**Patentansprüche**

1. Ein Verfahren zur Reduktion eines Metall enthaltenden Materials, wobei dieser Prozess umfasst:

    ein Metall enthaltendes Material wird in einem Reaktionshohlraum bereitgestellt,
    das Metall enthaltende Material wird durch Konvektions- und/oder Leitungs- und/oder Strahlungsmittel auf eine Reduktionstemperatur von weniger als 1200 °C aufgeheizt,
    das Metall enthaltende Material wird in dem Reaktionshohlraum einer Mikrowellen- (MW-) Energie ausgesetzt,
    das Metall enthaltende Material wird in dem Reaktionshohlraum einer Radiofrequenz- (RF-) Energie ausgesetzt und
    das Metall enthaltende Material wird in dem Reaktionsraum einem Reduktionsmittel ausgesetzt,
    wobei das einer MW- und/oder RF-Energie Aussetzen des Metall enthaltenden Materials das Material nicht signifikant aufheizt, da seine Temperatur um weniger als 50 °C angehoben wird.

**2.** Das Verfahren nach Anspruch 1, wobei das Metall enthaltende Material ein Erz oder ein Konzentrat aufweist und wobei optional das Metall enthaltende Material Eisen umfasst.

**3.** Das Verfahren nach Anspruch 2, wobei das Erz aus einem oder mehreren Mitgliedern der Gruppe Ilmenit, Titanomagnetit, Eisenerz, limonitische Laterite, Magnetit, Maghemit, Hämatit und saprolitische Laterite ausgewählt wird.

**4.** Das Verfahren nach einem der vorhergehenden Ansprüche, wobei das Metall enthaltende Material durch die Konvektions- und/oder Leitungs- und/oder Strahlungsmittel auf eine Temperatur aufgeheizt wird, die 850 °C nicht übersteigt.

**5.** Das Verfahren nach Anspruch 4, wobei das Metall enthaltende Material durch besagte Konvektions- und/oder Leitungs- und/oder Strahlungsvorrichtung auf eine Temperatur im Bereich von 400 bis 850 °C aufgeheizt wird.

**6.** Das Verfahren nach Anspruch 1, wobei das einer MW- und/oder RF-Energie Aussetzen des Metall enthaltenden Materials das Material um weniger als 10 °C aufheizt.

**7.** Das Verfahren nach einem der vorhergehenden Ansprüche, wobei die elektrische Spitzenfeldstärke der MW-Energie, die auf den Hohlraum angelegt wird, im Bereich von 300 bis 5.000 Vm$^{-1}$ liegt.

**8.** Das Verfahren nach einem der vorhergehenden Ansprüche, wobei die elektrische Spitzenfeldstärke der RF-Energie, die auf den Hohlraum angelegt wird, im Bereich von 3.000 bis 100.000 Vm$^{-1}$ liegt.

**9.** Das Verfahren nach einem der vorhergehenden Ansprüche, wobei das Reduktionsmittel ein Gas, welches aus Kohlenmonoxid und/oder Wasserstoff ausgewählt wird, umfasst.

**10.** Das Verfahren nach einem der Ansprüche 1 bis 8, wobei das Reduktionsmittel ein festes Material, das Kohlenstoff enthält, umfasst.

**11.** Das Verfahren nach einem der Ansprüche 1 bis 10, wobei das Reduktionsmittel in dem metallenthaltenden Material enthalten ist.

**12.** Das Verfahren nach einem der vorhergehenden Ansprüche, wobei das Metall enthaltende Material durch die Konvektions- und/oder Leitungs- und/oder Strahlungsmittel erwärmt wird, bevor das Material der MW- und/oder RF-Energie ausgesetzt wird.

**13.** Das Verfahren nach einem der Ansprüche 1 bis 11, wobei das Metall enthaltende Material der MW- und/oder RF-Energie ausgesetzt wird, während das Material durch die Konvektions- und/oder Leitungs- und/oder Strahlungsmittel erwärmt wird.

**14.** Das Verfahren nach einem der vorhergehenden Ansprüche, wobei das Metall enthaltende Material der MW- und/oder RF-Energie simultan ausgesetzt wird.

**15.** Ein extraktives metallurgisches Verfahren zur chemischen Reduktion eines Eisen enthaltenden Erzes oder Konzentrates, wobei dieses Verfahren umfasst:

Bereitstellen eines Eisen enthaltenden Erzes oder Konzentrates in einem Reaktionshohlraum,
Aufheizen des Erzes oder Konzentrates durch Konvektions- und/oder Leitungs- und/oder Strahlungsmittel,
das Erz oder Konzentrat wird in dem Reaktionsraum einem Reduktionsmittel ausgesetzt, wodurch einige oder alle Bestandteile des Erzes oder Konzentrates zu Eisen reduziert werden,
**dadurch gekennzeichnet, dass** gleichzeitig mit dem Heizen des Erzes oder Konzentrates in dem Reaktionsraum das Erz oder Konzentrat auch einer Mikrowellen- (MW-) Energie und einer Radiofrequenz- (RF-) Energie ausgesetzt wird, wobei die MW- und RF- Energieniveau so ausgewählt werden, dass eine geringe oder keine zusätzliche Erwärmung des Erzes oder Konzentrates erfolgt,
dass die Temperatur des Erzes oder Konzentrates um weniger als 50 °C ansteigt und
dass die Temperatur des Erzes oder Konzentrates während des Reduktionsverfahrens 850 °C, bevorzugt 650 °C, nicht übersteigt.

**EP 2 004 868 B1**

**Revendications**

1. Procédé de réduction d'un matériau contenant du métal, le procédé comprenant les étapes consistant à :

   fournir un matériau contenant du métal dans une cavité de réaction,
   chauffer ledit matériau contenant du métal par des moyens convecteur et/ou conducteur et/ou rayonnant à une température de réduction inférieure à 1200°C,
   exposer ledit matériau contenant du métal à une énergie micro-ondes (MW) dans la cavité de réaction,
   exposer ledit matériau contenant du métal à une énergie radiofréquence (RF) dans la cavité de réaction, et
   exposer ledit matériau contenant du métal à un agent de réduction dans la cavité de réaction,
   dans lequel l'exposition du matériau contenant du métal à une énergie micro-ondes et/ou radiofréquence ne chauffe pas significativement ledit matériau de sorte que sa température augmente de moins de 50°C.

2. Procédé selon la revendication 1, dans lequel le matériau contenant du métal comprend un minerai ou un concentré, ledit matériau contenant du métal comprenant en option du fer.

3. Procédé selon la revendication 2, dans lequel le minerai est choisi parmi un ou plusieurs de l'ilménite, la magnétite titanifère, le minerai de fer, les latérites limonitiques, la magnétite, la maghémite, l'hématite et les latérites saprolitiques.

4. Procédé selon une quelconque des revendications précédentes, dans lequel le matériau contenant du métal est chauffé par lesdits moyens convecteur et/ou conducteur et/ou rayonnant à une température qui n'excède pas 850°C.

5. Procédé selon la revendication 4, dans lequel le matériau contenant du métal est chauffé par lesdits moyens convecteur et/ou conducteur et/ou rayonnant à une température dans la plage de 400 à 850°C.

6. Procédé selon la revendication 1, dans lequel l'exposition du matériau contenant du métal à une énergie micro-ondes et/ou radiofréquence chauffe ledit matériau de moins de 10°C.

7. Procédé selon une quelconque des revendications précédentes, dans lequel le pic d'intensité de champ électrique de l'énergie micro-ondes appliquée à la cavité est compris dans la plage de 300 à 5000 Vm$^{-1}$.

8. Procédé selon une quelconque des revendications précédentes, dans lequel le pic d'intensité de champ électrique de l'énergie radiofréquences appliquée à la cavité est dans la plage de 3000 à 100 000 Vm$^{-1}$.

9. Procédé selon une quelconque des revendications précédentes, dans lequel l'agent de réduction comprend un gaz choisi parmi le monoxyde de carbone et/ou l'hydrogène.

10. Procédé selon une quelconque des revendications 1 à 8, dans lequel l'agent de réduction comprend un matériau solide comprenant du carbone.

11. Procédé selon une quelconque des revendications 1 à 10, dans lequel l'agent de réduction est compris dans le matériau contenant du métal.

12. Procédé selon une quelconque des revendications précédentes, dans lequel le matériau contenant du métal est chauffé par lesdits moyens convecteur et/ou conducteur et/ou rayonnant avant l'exposition dudit matériau à l'énergie micro-ondes et/ou radiofréquence.

13. Procédé selon une quelconque des revendications 1 à 14, dans lequel le matériau contenant du métal est exposé à une énergie micro-ondes et/ou radiofréquence pendant le chauffage dudit matériau par lesdits moyens convecteur et/ou conducteur et/ou rayonnant.

14. Procédé selon une quelconque des revendications précédentes, dans lequel le matériau contenant du métal est exposé simultanément à une énergie micro-ondes et une énergie radiofréquence.

15. Procédé d'extraction métallurgique en vue de la réduction chimique d'un minerai ou d'un concentré contenant du fer, le procédé comprenant les étapes consistant à :

**EP 2 004 868 B1**

fournir un minerai ou un concentré contenant du fer dans une cavité de réaction,
chauffer ledit minerai ou concentré par des moyens convecteur et/ou conducteur et/ou rayonnant,
exposer ledit minerai ou concentré à un agent de réduction dans la cavité de réaction, tout ou partie dudit minerai ou concentré étant réduit en fer,
**caractérisé en ce que** ledit minerai ou concentré est aussi exposé à une énergie micro-ondes (MW) et à une énergie radiofréquence (RF) dans la cavité de réaction simultanément audit chauffage dudit minerai ou concentré, les niveaux d'énergie micro-ondes et radiofréquence étant choisis de sorte qu'il y ait peu ou pas de chauffage additionnel dudit minerai ou concentré de sorte que la température du minerai ou du concentré augmente de moins de 50°C,
et **en ce que** la température dudit minerai ou concentré n'excède pas 850°C, de préférence 650°C, pendant le procédé de réduction.

Figure 1: Block flow diagram of the invention, showing the following components: 1, Reaction cavity; 2, heating element; 3, microwave source; 4, RF source; 5, mineral feed; 6, product discharge; 7, reductant off-gas; 8, reductant feed gas.

Figure 2: Comparison of the measured furnace and sample temperatures under an applied microwave and radio frequency field.

Figure 3: Kinetics for the metallisation of ilmenite under hydrogen as a function of temperature. MW power = 900 W, RF power = 300 W.

Figure 4:  The effect of temperature on the extent of enhancement of the metallisation of ilmenite.  Reaction time was 60 minutes , $P_{MW}$ = 900 W, $P_{RF}$ = 300 W.

Figure 5:  The effect of dielectric power on the reduction of ilmenite.  Reaction time was 60 minutes and the ratio of MW power to RF power was 3:1.

**Figure 6:** Kinetics at 850°C under 70% CO and 15% $H_2$.

**Figure 7:** Kinetics at 900°C under 70% CO and 15% $H_2$.

**Figure 8: Kinetics at 950°C under 70% CO and 15% H$_2$.**

**Figure 9: Kinetics at 650°C under 100% hydrogen.**

Figure 10:   Kinetics at 750°C under 100% hydrogen.

Figure 11:   Kinetics at 850°C under 100% hydrogen.

Figure 12: Effect of the preoxidation temperature on mass loss (metallisation). Reduction at 600°C under hydrogen for 60 minutes. $P_{MW}$ = 900 W, $P_{RF}$ = 300 W.

Figure 13: Effect of reduction temperature. Pre-oxidised at 950°C, Reduced under hydrogen for 60 minutes. $P_{MW}$ = 900 W, $P_{RF}$ = 300 W.

Figure 14: The effect of power on the reduction of ilmenite pre-oxidised at 950°C and then reduced under hydrogen at 600°C and 750°C over a 60 minute period.

Figure 15: Reduction kinetics at 600°C under hydrogen after pre-oxidation at 950°C. $P_{MW}$ = 900 W, $P_{RF}$ = 300 W.

Figure 16:  The effect of temperature on the reduction kinetics under hydrogen after pre-oxidation at 950°C.  $P_{MW}$ = 900 W, $P_{RF}$ = 300 W.

Figure 17:  The effect of the reduction temperature on metallisation after pre-oxidation at 950°C for 60 minutes.  $P_{MW}$ = 900 W, $P_{RF}$ = 300 W.

Figure 18: Kinetics at 850°C after pre-oxidation at 950°C. $P_{MW} = 900$ W, $P_{RF} = 300$ W.

Figure 19 : Particle size distribution for the titaniferous magnetite sample. The +106 μm -1700 μm fraction (shaded) was used in fluidised bed reactor experiments.

Figure 20: Metallisation under hydrogen at 600°C

Figure 21: indicative enhancement ratio as a function of
temperature.

**Figure 22:** The effect of MW power on the enhancement of magnetite metallisation.

**Figure 23:** The effect of RF power on the enhancement of magnetite metallisation

Figure 24: Reduction of hematite iron ore fines under hydrogen. Forward $P_{MW}$ = 900 W and $P_{RF}$ = 300 W.

Figure 25: The effect of temperature on the extent and
kinetics of the reduction of Hematite iron
ore fines under carbon monoxide. Forward $P_{MW}$
= 900 W and $P_{RF}$ = 300 W.

Figure 26 : Comparison of the mass losses for the reduction of Hematite iron ore fines under hydrogen and under carbon monoxide. Samples were reduced under either 100% hydrogen or 100% CO. In the case of CO, the mass of carbon deposited on the sample was analysed and accounted for. Initial sample mass was 10 g and the residence time was 30 minutes

Figure 27: The particle size distribution of the limonitic nickeliferous laterite sample showing the size fractions used in the test work.

Figure 28: Comparison of the reduction of ferric iron under conventional and dielectric assisted conditions. The reduction temperature was 700°C, the reductant gas was composed of 18% CO, 30% $H_2$, 2% $CO_2$, balance $N_2$. $P_{MW}$ = 900 W, $P_{RF}$ = 300 W.

Figure 29: Comparison of the formation and reduction of ferrous iron under conventional and dielectric assisted conditions. The reduction temperature was 700°C, the reductant gas was composed of 18% CO, 30% $H_2$, 2% $CO_2$, balance $N_2$. $P_{MW}$ = 900 W, $P_{RF}$ = 300 W.

Figure 30:  Comparison of the formation of metallic iron
under conventional and dielectric assisted
conditions.  The reduction temperature was
700°C, the reductant gas was composed of 18%
CO, 30% $H_2$, 2% $CO_2$, balance $N_2$. $P_{MW}$ = 900 W,
$P_{RF}$ = 300 W.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4906290 A
- US 6277168 B

- EP 0914752 A